# EUROPEAN PATENT APPLICATION

(11) **EP 4 852 019 A1**
(43) Date of publication of application: **09.12.2026**
(21) Application number: 25181418.2
(22) Date of filing: 06.06.2025
(51) Int. Cl.: G21C 15/243, H02K 44/06, G21C 3/54

(54) **NUCLEAR REACTOR ELECTROMAGNETIC ACTUATOR SYSTEM FOR USE IN A NUCLEAR REACTOR ENVIRONMENT**

(71) Applicant: Thorizon Holding B.V., 1012 SN Amsterdam (NL)
(72) Inventor: RUSSO, Giulia, 1012 SN AMSTERDAM (NL)
(74) Representative: EP&C

(57) **Abstract**

The invention relates to a nuclear reactor electromagnetic actuator system (2) for use in a nuclear reactor environment, comprising:
- a magnetic field-generating component (4) configured to generate a magnetic field upon application of an electric current;
- a magnetically responsive component (8) configured to respond to said magnetic field;
- a fluid-moving assembly configured for circulating a fluid in response to interaction between the magnetic field-generating component (4) and the magnetically responsive component (8),
The magnetically responsive component is made of substantially pure iron.

## Description

### FIELD OF THE INVENTION

The invention relates to an electromagnetic actuator system for use in a nuclear reactor environment, a nuclear reactor comprising such electromagnetic actuator system and a method for manufacturing an electromagnetic actuator system.

### BACKGROUND OF THE INVENTION

There is an increasing global emphasis on nuclear energy for achieving a successful energy transition and reducing dependency on fossil fuels. Among the most promising developments in this field are molten salt reactors (MSRs), which use a liquid nuclear fuel composition that circulates through the reactor core during operation. In these MSR systems, reliable circulation of the molten salt is important. Potential reactor designs comprise compact housings in which a pump is arranged relatively close to the critical core region. As a result, these pumps must operate under extreme environmental conditions, including temperatures around 600-750°C and intense radiation fields.

Conventional magnetic motors are not suitable for these conditions, as standard commercial materials and designs are not qualified for prolonged exposure to such environments. For example, most industrial electric drive systems are not designed to maintain mechanical and magnetic integrity at elevated temperatures or under sustained neutron irradiation. Material properties are typically well characterized up to 550-600°C, but reliable performance up to 750°C may be feasible with the application of appropriate safety factors and material selection strategies. This is however not possible for magnetic properties. In fact, the behaviour of magnetic properties is strongly dependent on temperature and strongly non-linear, decreasing rapidly towards the Curie Temperature of the material. Furthermore, for an electric drive system in a radiation field, the exposure to radiation (alpha, beta, gamma, neutron and proton) can sometimes not be avoided. Microstructural changes induced by irradiation can further permanently decrease the magnetic properties of a material. Radiation, and neutron radiation specifically, alters materials at the atomic level, causing relocation of atoms, changing the microstructure and introducing transmutation, altering the material in ways potentially fundamental for the magnetic properties.

M400-65A (EN 1.0821) is the most conventional magnetic steel with non-oriented grains used in the design and manufacturing of conventional electric drive and generator systems as well as in electric transformers. Non-oriented electrical steel is widely used as the core material of electric motors, which has the advantages of high magnetic saturation point, good mechanical strength, low anisotropy and low cost. However, the low Curie Temperature of this material (M400-65A) makes it unusable in temperatures of up to 750°C. Moreover, it has been found that radiation induced microstructural change which can be compared to accelerated thermal annealing, will deteriorate the magnetic properties undesirably within a nuclear reactor setting.

Another potential material for use in the electric drive system is H11 steel (AMS6437), which has been widely tested by NASA in the late 60s. A disadvantage of this material is that radiation can induce microstructural changes, which can be compared to accelerated thermal annealing (atomic relocation and restructuring), which can reduce magnetic properties over time. Moreover, H11 steel is a very specific alloy, not commonly available and requires dedicated manufacturing of the bulk material, of the semi-products (thin sheets) and of the final product (properly fused layered material).

The present invention aims to overcome these disadvantages at least partly or to provide a usable alternative. In particular the present invention aims to provide an electromotor that may be used in the extreme environment of a nuclear reactor.

### DESCRIPTION OF THE INVENTION

In a first aspect, the invention relates to a nuclear reactor electromagnetic actuator system for use in a nuclear reactor environment, comprising:
- a magnetic field-generating component configured to generate a magnetic field upon application of an electric current;
- a magnetically responsive component configured to respond to said magnetic field;
- a fluid-moving assembly configured for circulating fluid in response to interaction between the magnetic field-generating component and the magnetically responsive component,
wherein at least the magnetically responsive component is made of a ferromagnetic material.

According to the inventive thought, the ferromagnetic material is substantially pure iron.

With a nuclear reactor environment is meant that the electromagnetic actuator system must be suitable for operation at high temperatures, typically in the range of 500-750°C. Additionally, it must endure an intense radiation environment with strong neutron and gamma fluxes near the reactor core.

Throughout the description, nuclear molten salt reactors are used as a representative example. These reactors typically operate by circulating a fluid, such as a nuclear molten salt fuel composition that may comprise fissile and/or fertile nuclear material, through various reactor zones to generate and extract heat. However, it is also envisioned that the electromagnetic actuator system described herein may be employed in other types of reactors. Additionally, the system could be used to circulate fluids other than molten salt fuel composition, such as secondary coolant liquids or similar heat transfer media.

The magnetically responsive component, e.g. a rotor or movable actuator element, is configured to respond to said magnetic field. This may cause a mechanical motion in fluid-moving assembly to circulate the fluid, e.g. a nuclear molten salt fuel composition within a nuclear reactor. The motion is driven by magnetic forces induced in the magnetically responsive component, which causes it to align with or move relative to the magnetic field. The mechanical motion may involve linear displacement, rotational movement, or oscillatory behavior, depending on the actuator design. Preferably however, this involves rotational movement.

To do so efficiently and reliably, it must respond rapidly and strongly to the applied magnetic field. It has been found by the inventors of the present invention that substantially pure iron as material for the magnetically responsive component allows it to retain ferromagnetic properties at elevated temperatures typical of nuclear reactor environments. In contrast, many conventional iron alloys have lower Curie points and begin to lose magnetic performance around 500-700°C. The high Curie temperature of pure iron, approximately 770°C, ensures stable magnetic behavior and reduced risk of thermal demagnetization, even under prolonged exposure to reactor operating conditions near or above 600°C. This makes substantially pure iron suitable for high-performance magnetic actuation in nuclear applications.

A further advantage identified by the inventors is that the use of substantially pure iron as the ferromagnetic material in the magnetically responsive component helps prevent excessive material degradation under elevated temperatures and neutron irradiation. This results from the reduced concentration of alloying elements and impurities, which may otherwise degrade magnetic performance and accelerate radiation-induced damage due to for example defects in the crystal lattice. As a result, the component exhibits enhanced radiation tolerance. This makes pure iron well-suited for MSR environments.

The use of substantially pure iron as the ferromagnetic material thus enables the actuator system to function reliably at elevated temperatures exceeding 600°C and up to 750°C and under intense radiation conditions typically encountered in close proximity to the nuclear core zone. The invention thereby overcomes the disadvantages of conventional actuator systems, which would require heavy shielding or frequent replacement in such conditions. Thus, the electromagnetic actuator system may be arranged closer to the reactor core, thereby reducing the need for long mechanical linkages or thermally isolated compartments. As a result, the overall reactor system can be designed more compact, which offers advantages such as enhanced transportability of the reactor unit.

It will be understood by the skilled person that the term "substantially pure iron" refers specifically to the ferromagnetic parts of the magnetically responsive component. Voids, or other parts of the magnetically responsive component that do not serve a magnetic function, may be composed of other materials.

The magnetic field-generating component and the magnetically responsive component may be provided in a housing or other reactor-compatible containment. Such housing may serve to provide structural integrity and protect the components from the corrosive character of the nuclear environment. Sealing of the components may be achieved e.g. welded joints, chemically resistant gaskets, or hermetic sealing techniques, potentially with an inert gas backfill to isolate the actuator from the nuclear atmosphere. An example of a sealing technique is provided in the patent application with application no. EP 24222554.8 by the applicant.

Suitable housing materials may e.g. be nickel-based alloys or stainless steels. The housing material is not required to be magnetically responsive and may therefore be made from other materials than substantially pure iron.

In an embodiment of the invention, the substantially pure iron comprises at least 99.7% by weight of elemental iron, preferably at least 99.8% by weight of elemental iron, more preferably at least 99.9% by weight of elemental iron. High-purity iron offers additional advantages at the crystallographic level. The reduction of alloying elements and impurities leads to a more uniform and defect-free crystal lattice, which enhances the magnetic response of the magnetically responsive component. In a nuclear environment, this cleaner lattice also provides improved resistance to radiation-induced damage. When iron is exposed to neutron flux, atomic displacements may create point defects and defect clusters. In high-purity iron, these radiation-induced defects are less likely to interact with pre-existing impurities, which reduces the likelihood of long-term lattice distortion. This contributes to mechanical integrity and magnetic performance over time.

In an embodiment of the invention, the substantially pure iron comprises no more than 0.3% by weight of total impurities, preferably no more than 0.2%, e.g. no more than 0.1% including but not limited to carbon, sulfur, phosphorus, silicon, manganese, and/or trace elements. Reducing the concentration of alloying elements and impurities minimizes magnetic losses and material degradation over time due to neutron irradiation.

In an embodiment of the invention, each of the magnetic field-generating component and magnetically responsive component are made of substantially pure iron. An advantage thereof is that when both the magnetic field-generating component and the magnetically responsive component are made of substantially pure iron, the actuator system benefits from improved magnetic coupling efficiency due to the material's high permeability on both sides of the magnetic interaction. Using substantially pure iron throughout both components ensures uniform thermal and radiation response characteristics. With fewer alloying elements or inclusions that could respond unpredictably under irradiation, the risk of differential swelling, embrittlement, or magnetic property degradation between the two components is minimized.

In an embodiment of the invention, one of the magnetic field-generating component and magnetically responsive component comprises a stator and the other of the magnetic field-generating component and magnetically responsive component comprises a rotor, wherein the rotor is adapted to rotate under the influence of the magnetic interaction between the rotor and the stator, and wherein the stator and/or the rotor is made of substantially pure iron. Preferably, the magnetic field-generating component comprises a stator, and the magnetically responsive component comprises is a rotor which is adapted to rotate under influence of the magnetic field of the stator.

The rotor and the stator may be arranged coaxially around a central axis. Preferably, the rotor is mounted on a shaft that extends along the central axis and protrudes from one or both ends of the actuator housing to provide mechanical output. An impeller or similar fluid-moving assembly may be mounted on the shaft and configured to induce fluid motion, thereby circulating the fluid, e.g. a nuclear molten salt fuel composition, within the reactor system.

Examples of electromagnetic actuator systems, or electromotors, that may be suitable for the application are synchronous motors, induction motors, stepper motors, brushless DC motors or switched reluctance motors. The substantially pure iron rotor/stator assemblies are suitable to withstand elevated temperatures and radiation exposure in a nuclear reactor. In lower temperature ranges, e.g. in nuclear reactors with nitrate salts, use may also be made of permanent magnets.

In an embodiment of the invention, wherein the material has an ASTM E112 grain size number of at least 1, more preferably greater than 1.

In substantially pure iron, improving magnetic properties by using alloying elements is not a feasible solution (otherwise, a composition similar to H11 or M-400-65A will be obtained). In metallic materials, the grain size dimensions are generally minimized to enhance mechanical properties, such as higher strength and lower ductility. However, magnetic properties enhancement can be obtained by enlarging the grain dimensions. The larger the grain size the larger will be the magnetic permeability, and therewith lower core losses.

A combination of cold work and annealing may maximise magnetic properties. In particular, cold work will allow to elongate pure iron grains and performing annealing afterwards will allow for dislocation removal, releasing existing stresses (created by the previous stage) in the material.

In an embodiment of the invention, the magnetically responsive component that is made of substantially pure iron has a relative magnetic permeability in the range of 1,500 - 5,000. This provides an optimal balance between magnetic flux conduction efficiency, core loss minimization, and mechanical integrity.

In a second aspect, the invention relates to a nuclear reactor system comprising at least one containment module comprising a fluid circuit suitable for retaining a fluid therein, and an electromagnetic actuator system according to the first aspect of the invention that is configured to circulate the fluid through the fluid circuit.

Preferably, the fluid circuit is a molten salt circuit that is configured for retaining a nuclear molten salt fuel composition. The molten salt circuit preferably extends through at least a reactor core region, in which the fuel undergoes nuclear fission to generate heat, and a heat exchanger region, where thermal energy is transferred from the nuclear molten salt fuel composition to a secondary fluid or power conversion system or the like. The system further comprises an electromagnetic actuator system, as defined in the first aspect of the invention that is configured to induce motion of the nuclear molten salt fuel composition through the molten salt circuit.

Preferably, the nuclear reactor system, such as a nuclear molten salt reactor system, comprises a plurality of discrete containment modules, each of which is a sealed unit designed to enclose and manage a molten salt circuit. The design of each module ensures full physical separation of the respective molten salt circuits. Preferably each individual module, in isolation, remains subcritical, thereby enhancing intrinsic safety and simplifying handling, transportation, and maintenance operations. When multiple modules are assembled in proximity they collectively define a critical zone to obtain a critical mass and enable sustained nuclear fission. Preferably, an electromagnetic actuator system according to the first aspect of the invention is arranged within each of the containment module, i.e. each containment module has its own respective electromagnetic actuator system. In this embodiment, the electromagnetic actuator system is fully housed within a containment structure of the module. As such there are no mechanical penetrations, such as pump shaft throughputs, through the containment structure. This design preserves the hermetic integrity of the module and simplifies maintenance procedures, as a module may be replaced in its entirety, thereby avoiding the need to breach the containment during component replacement. Moreover, due to the use of pure iron as ferromagnetic material in the electromagnetic actuator system, the actuator system may be arranged relatively close to the nuclear core region, e.g. in the range of 2-6 meters from the reactor core region.

In an embodiment of the invention, the electromagnetic actuator system comprises an impeller configured to circulate the fluid through the fluid liquid circuit. The impeller may be magnetically or mechanically coupled to the actuator via a drive shaft that rotates simultaneously with the rotor.

In a third aspect, the invention relates to a method for producing an electromagnetic actuator system according to the first aspect of the invention, comprising the steps of
- pre-shaping a pure iron material into the shape of one of magnetic field-generating component or magnetically responsive component,
- cold working the pre-shaped component,
- annealing the cold worked component, and
- assembling the annealed magnetic field-generating component (4) or magnetically responsive component (8) with the other of the magnetic field-generating component (4) or magnetically responsive component (8) to obtain the electromagnetic actuator system (2).

In substantially pure iron, improving magnetic properties by using alloying elements is not a feasible solution (otherwise, a composition similar to H11 or M-400-65A will be obtained). In metallic materials, the grain size dimensions are generally minimized to enhance mechanical properties, such as higher strength and lower ductility. However, magnetic properties enhancement can be obtained by enlarging the grain dimensions. The larger the grain size the larger will be the magnetic permeability, and therewith lower core losses. A combination of cold work and annealing is used to maximise magnetic properties. In particular, cold work will allow to elongate pure iron grains and performing annealing afterwards will allow for dislocation removal, releasing existing stresses (created by the previous stage) in the material.

### BRIEF DESCRIPTION OF THE DRAWINGS

The invention shall now be explained in more detail below by means of describing some exemplary embodiments in a non-limiting way with reference to the accompanying drawings, in which:
- Fig. 1 shows a graphical representation of the magnetic properties of H11 steel and pure iron;
- Fig. 2 shows a schematical representation of an exemplary electromagnetic actuator system according to an embodiment of the invention;
- Fig. 3 shows an embodiment of a nuclear reactor system with an electromagnetic actuator system according to an aspect of the invention.

### DETAILED DESCRIPTION OF THE DRAWINGS

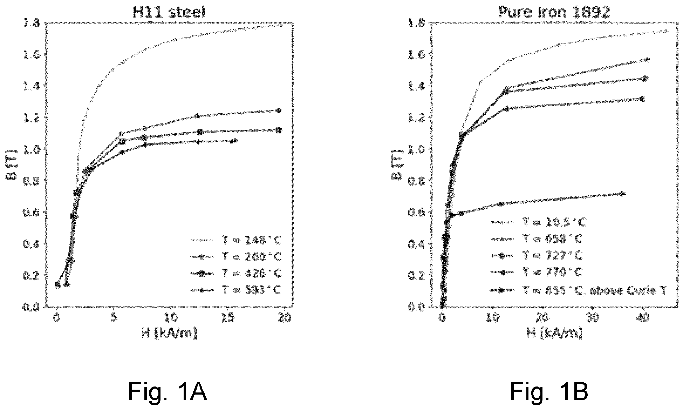

Fig. 1 graphically shows comparative B-H curves (magnetic flux density B in tesla [T] vs. magnetic field strength H in kA/m) for H11 steel (Fig. 1A) and substantially pure iron (Fig. 1B) across multiple temperatures. The curves demonstrate how magnetic properties degrade with increasing temperature.

In Fig. 1A the magnetic flux density decreases progressively as temperature increases from 148°C to 593°C. The saturation magnetization and slope of the B-H curve (magnetic permeability) both decline. This indicates that the magnetic performance decreases with increasing temperature. At 593°C, magnetic saturation occurs at a much lower B value (~1.0 T) compared to 148°C (~1.75 T). No further data is available above 593°C.

In Fig. 1B, it is shown that pure iron maintains higher magnetic permeability and saturation compared to H11 steel at elevated temperatures. Magnetic performance remains relatively strong up to ~727°C. However, a sharp drop is observed at 770°C, and at 855°C, which is above the Curie temperature. The data for the magnetic behavior of pure iron in Fig. 1B is retrieved from *"*Magnetic Properties of Pure Iron," Proc. R. Soc. Lond. Vol. 51, 1892, pp. 308-310*.*

Comparing the graphs it is clear that pure iron exhibits significantly better magnetic properties at elevated temperatures compared to H11 steel. H11 steel experiences significant degradation already at temperatures well below the Curie point. This supports the use of substantially pure iron in magnetic components exposed to high temperatures, such as in nuclear reactor environments.

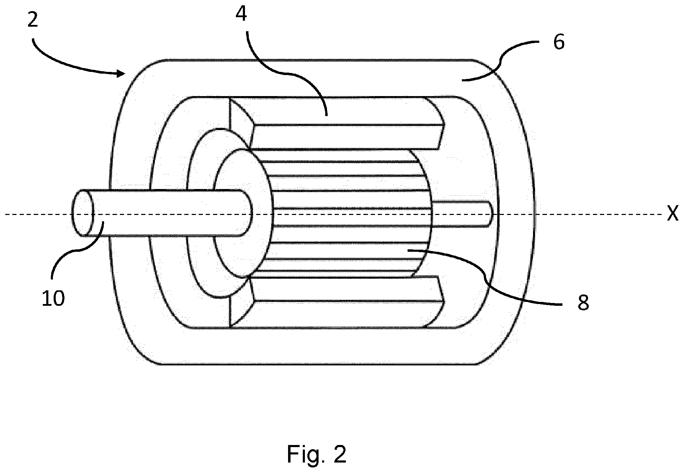

Fig. 2 shows schematically an electromagnetic actuator system that is in its entirety denoted with reference numeral 2. The electromagnetic actuator system is an electromotor 2 that comprises a rotor-stator configuration. The motor 2 includes a stator 4, which is a stationary component disposed about a central axis X. The stator 4 in this embodiment is configured to generate a magnetic field upon the application of electric current. The stator 4 may be fixedly mounted within a housing 6 or reactor-compatible containment using a support structure or mounting base.

Coaxially arranged within the stator 4 is a rotor 8, which is a magnetically responsive component 4 and configured to rotate under the influence of the magnetic field generated by the stator 4. The rotor 8 is mounted on a shaft 10 that extends along the central axis X and protrudes from one end of the motor housing 6 to provide mechanical output. The rotor in this embodiment is made of substantially pure iron as ferromagnetic material, e.g. of at least 99.7% by weight of elemental iron.

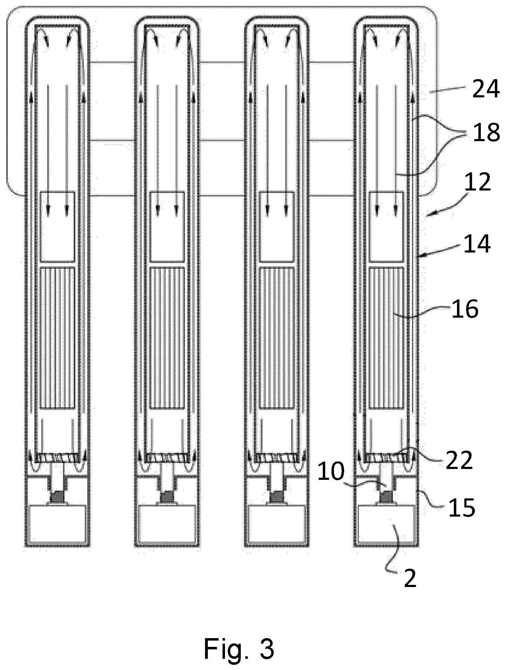

Figure 3 illustrates an exemplary embodiment of a nuclear reactor system 12 that comprises an electromagnetic actuator system according to the first aspect of the invention. The nuclear reactor system in this embodiment is a nuclear molten salt reactor and comprises a plurality of sealed containment modules 14 that each have a containment structure 15. Each module 14 comprises a heat exchanger 16 for transferring thermal energy generated in a reactor core region, and a fluid circuit 18 (in this embodiment a molten salt circuit) in which fluid, e.g. a nuclear molten salt fuel composition, is retained. The molten salt circuit 18 extends through at least the reactor core region, in which the fuel undergoes nuclear fission to generate heat, and a heat exchanger region in which the heat exchanger 16 is provided. Additionally, each containment module 14 is equipped with an electromagnetic actuator system 2 according to the invention, e.g. the electromotor of Fig. 2, configured to circulate a fluid, e.g. the nuclear molten salt fuel composition, within the molten salt circuit 18. The electromotor therefore comprises a shaft 10 protrudes from the actuator housing. An impeller 22 is mounted on the shaft 10 and configured to induce fluid motion, thereby circulating the nuclear molten salt fuel composition through the molten salt circuit 18.

The nuclear reactor system 12 includes a reactor unit 24, wherein the combination of multiple containment modules 14 enables the nuclear molten salt fuel compositions 18 within the modules to collectively exceed the critical mass threshold. As the molten salt fuel composition is circulated within the molten salt circuit 18 of the modules 14, a sustained nuclear reaction is initiated in the reactor unit 24, thereby generating heat. This thermal energy is then transferred to a secondary fluid or power conversion system or the like via the heat exchangers 16 in each module 14.

In this embodiment, the electromagnetic actuator system 2 is fully housed within the containment structure 15 of the module 14. As such there are no mechanical penetrations, such as pump shaft 10 throughputs, through the containment structure 15. This design preserves the hermetic integrity of the module 14 and simplifies maintenance procedures, as a module may be replaced in its entirety, thereby avoiding the need to breach the containment during component replacement.

## Claims

1. Nuclear reactor electromagnetic actuator system (2) for use in a nuclear reactor environment, comprising:
- a magnetic field-generating component (4) configured to generate a magnetic field upon application of an electric current;
- a magnetically responsive component (8) configured to respond to said magnetic field;
- a fluid-moving assembly configured for circulating fluid in response to interaction between the magnetic field-generating component (4) and the magnetically responsive component (8),
wherein the magnetically responsive component is made of a ferromagnetic material,
**characterized in that** the ferromagnetic material is substantially pure iron.

2. Electromagnetic actuator system (2) according to claim 1, wherein the substantially pure iron comprises at least 99.7% by weight of elemental iron, preferably at least 99.8% by weight of elemental iron, more preferably at least 99.9% by weight of elemental iron.

3. Electromagnetic actuator system (2) according to claim 1 or 2, wherein the substantially pure iron comprises no more than [X]% by weight of total impurities, including but not limited to carbon, sulfur, phosphorus, silicon, manganese, and/or trace elements.

4. Electromagnetic actuator system (2) according to any one of the preceding claims, wherein each of the magnetic field-generating component (4) and magnetically responsive component (8) are made of substantially pure iron.

5. Electromagnetic actuator system (2) according to any one of the preceding claims,
wherein one of the magnetic field-generating component (4) and magnetically responsive component (8) comprises a stator (4) and the other of the magnetic field-generating component (4) and magnetically responsive component (8) comprises a rotor (8),
wherein the rotor (8) is adapted to rotate under the influence of a magnetic interaction between the rotor (8) and the stator (4), and
wherein at least one of the stator (4) and the rotor (8) is made of substantially pure iron.

6. Electromagnetic actuator system (2) according to claim 5, wherein the magnetic field-generating component (4) comprises a stator (4), and wherein the magnetically responsive component (8) comprises a rotor (8) which is adapted to rotate under influence of the magnetic field of the stator (4).

7. Electromagnetic actuator system (2) according to any one of the preceding claims, wherein the material has an ASTM E112 grain size number of at least 1, more preferably greater than 1.

8. Electromagnetic actuator system (2) according to any one of the preceding claims, the magnetically responsive component (8) that is made of substantially pure iron that has a relative magnetic permeability in the range of 1,500 - 5,000.

9. Nuclear reactor, comprising
- a containment structure (15) comprising a fluid circuit (18) suitable for retaining a fluid, such as a nuclear molten salt fuel composition, and
- an electromagnetic actuator system (2) according to any one of the claims 1-8 configured to circulate the fluid through the fluid circuit (18).

10. Nuclear reactor according to claim 9, wherein the electromagnetic actuator system (2) is arranged within the containment structure (15).

11. Nuclear reactor according to claim 9 or 10, wherein the electromagnetic actuator system (2) is arranged at a distance in the range of 2-6 meters from a critical reactor core.

12. Nuclear reactor according to any one of the claims 9-11, wherein the electromagnetic actuator system (2) comprises an impeller (22) configured to circulate the fluid through the fluid circuit.

13. Method for producing an electromagnetic actuator system (2) according to claim 1-8, comprising the steps of
- forming a pure iron material into the shape of one of magnetic field-generating component (4) or magnetically responsive component (8),
- cold working the shaped component,
- annealing the cold worked component, and
- assembling the annealed magnetic field-generating component (4) or magnetically responsive component (8) with the other of the magnetic field-generating component (4) or magnetically responsive component (8) to obtain the electromagnetic actuator system (2).
